**Europäisches Patentamt**

**European Patent Office**

**Office européen des brevets**

(11) Veröffentlichungsnummer: **0 235 617**
**B1**

## EUROPÄISCHE PATENTSCHRIFT

(45) Veröffentlichungstag der Patentschrift:
15.11.89

(21) Anmeldenummer: **87101713.3**

(22) Anmeldetag: **07.02.87**

(51) Int. Cl.⁴: **F16L 3/12**, F16L 3/14

(54) **Montageschelle.**

(30) Priorität: **21.02.86 CH 708/86**

(43) Veröffentlichungstag der Anmeldung:
**09.09.87 Patentblatt 87/37**

(45) Bekanntmachung des Hinweises auf die Patenterteilung:
**15.11.89 Patentblatt 89/46**

(84) Benannte Vertragsstaaten:
**AT BE CH DE ES FR GB GR IT LI LU NL SE**

(56) Entgegenhaltungen:
**DE-A- 2 255 320**
**DE-A- 3 204 023**
**DE-U- 8 527 403**
**US-A- 2 466 247**
**US-A- 3 236 482**

(73) Patentinhaber: **SWG Stanzwerk Glarus AG,**
**Buchholzstrasse 48, CH-8750 Glarus(CH)**

(72) Erfinder: **Hausmann, Manfred, Pardiel 57,**
**FL-9494 Schaan(LI)**

(74) Vertreter: **Schmauder, Klaus Dieter et al, c/o Schmauder**
**& Wann Patentanwaltsbüro Nidelbadstrasse 75,**
**CH-8038 Zürich(CH)**

ACTORUM AG

## Beschreibung

Die Erfindung betrifft eine Montageschelle der im Oberbegriff des Anspruchs 1 genannten Art.

Montageschellen der eingangs genannten Art sind mehrfach bekannt, so zum Beispiel aus der DE-A 3 204 023, und dienen zum Befestigen von Leitungen, insbesondere Rohrleitungen. Dabei ist es besonders nachteilig, dass die Bandenden am Aufnahmekörper auf gleicher Höhe angeordnet sind und somit stets gleichzeitig eingelegt und solang gehalten werden müssen, bis sie mittels der Verriegelungshülse gehalten und gesichert werden. Diese Handhabung ist jedoch umständlich und erfordert praktisch zwei Hände, sodass keine Hand zum Anlegen des Bandes um einen Bauteil oder zum Halten des letzteren frei ist, sodass bei der Montage praktisch eine zusätzliche Hilfskraft erforderlich ist.

Die US-A 2 466 247 zeigt eine Montageschelle mit einem Befestigungsteil, an dem ein mittels eines Verschlusses verschliessbarer Bandteil angeordnet ist, wobei der Verschluss einen mit dem Befestigungsteil verbundenen U-förmigen Aufnahmekörper und ein daran befestigtes schwenkbares Verriegelungselement aufweist. Der Aufnahmekörper enthält an gegenüberliegenden Seiten Aufnahmeausnehmungen zur Aufnahme von Verankerungselementen der Bandenden. Das Verriegelungselement ist nur einer der Aufnahmeausnehmungen zugeorndet und schwenkbar am Aufnahmekörper angeordnet, um das entsprechende Bandende zu arretieren. Das andere Bandende ist mit einem Quersteg versehen und kann nur durch Verschwenken des Bandendes an einem entsprechenden Langloch des Aufnahmekörpers angesetzt werden. Die Bandenden sind auf unterschiedlichen Höhen am Aufnahmekörper angeordnet. Da die Befestigung der Bandenden am Aufnahmekörper unabhängig voneinander nicht durch eine verschiebbare Hülse, die über die beiden Bandenden geschoben wird, erfolgt, hat die Anordnung der Bandenden in unterschiedlichen Höhen keinerlei Einfluss auf deren Befestigung und ist willkürlich wählbar.

Aufgabe der Erfindung ist es, eine Montageschelle der eingangs genannten Art so auszubilden, dass die Handhabung wesentlich vereinfacht ist.

Die Aufgabe wird erfindungsgemäss durch die kennzeichnenden Merkmale des Anspruchs 1 gelöst.

Die Anordnung der Bandenden auf verschiedenen Höhen am Aufnahmekörper gestattet eine äusserst einfache und bequeme Montage, wobei zunächst ein Bandende am Aufnahmekörper mittels der Verriegelungshülse fixiert wird, sodass die Hände frei sind, um das Bandende um einen zu montierenden Bauteil zu legen und dann das andere Bandende am Aufnahmekörper anzubringen und mittels der Verriegelungshülse zu verriegeln.

Dadurch ist eine einfache Montage auch ohne Hilfskräfte gewährleistet.

Vorteilhafte Ausgestaltungen der Montageschelle sind in den Ansprüchen 2 bis 10 beschrieben.

Die Anordnung der Bandenden auf unterschiedlicher Höhe am Aufnahmekörper kann in vorteilhafter Weise nach den Ansprüchen 2 oder 3 gelöst werden.

Eine Ausgestaltung der Montagehülse nach Anspruch 4 bietet die Möglichkeit, dass der Bandteil nach der Verriegelung am Aufnahmekörper eine gewisse Schwenkbewegung um die Achse der Verankerungsbolzen ausführen kann, sodass sich die Montageschelle bzw. der Bandteil in gewissen Grenzen der Lage des zu befestigenden Bauteiles anpassen kann.

Gemäss Anspruch 5 können die Verankerungselemente durch an den Bandenden befestigte Bauteile gebildet sein. Dabei können die Verankerungselemente am Bandende angeschweisst, angelötet, angenietet, angeklebt oder angeschraubt sein. Eine solche Lösung ist beispielsweise dann denkbar, wenn die Verankerungselemente als Bolzen ausgestaltet sind. Eine solche Lösung ist auch dann empfehlenswert, wenn das Verankerungselement und der Bandteil aus verschiedenen Materialien bestehen, wie beispielsweise ein Verankerungselement aus Metall und ein Bandteil aus einem Gewebe.

Die Ausbildung der Montageschelle nach Anspruch 6 verbessert deren Handhabung wesentlich, da die Verriegelungshülse im jeweiligen Betriebszustand festlegbar ist, sodass beide Hände für das Anlegen des Bandteiles und das endgültige Verriegeln der Bandteile frei sind.

Es kann zweckmässig sein, die Montageschelle nach Anspruch 7 auszugestalten, insbesondere dann, wenn die Gefahr besteht, dass Schwingungen oder Erschütterungen ein unbeabsichtigtes Lösen der Verriegelungshülse bewirken könnte.

Eine Ausgestaltung der Montageschelle nach Anspruch 8 erleichtert das Ausrichten eines zu befestigenden Bauteiles an der Montageschelle, da der Bauteil zwischen den Zentriernocken ausgerichtet werden kann. Eine Ausgestaltung des Zentriernockens, mindestens teilweise aus Kautschuk, ermöglicht es, den Bauteil mit einer gewissen Vorspannung an der Montageschelle zu befestigen. Weiter kann diese Ausbildung dazu beitragen, die Uebertragung von Körperschall zu verhindern, insbesondere dann, wenn der Bandteil ebenfalls mit Kautschuk beschichtet ist. Die Verwendung von Kautschuk bei einer Montageschelle verhindert auch ein Verrutschen des zu befestigenden Bauteiles in der Montageschelle.

Eine besonders einfache und wirtschaftlich herstellbare Montageschelle beschreibt Anspruch 9. Dabei ist insbesondere eine Weiterbildung nach Anspruch 10 von Vorteil, die eine Uebertragung von Körperschall verhindert.

Ausführungsbeispiele des Gegenstandes der Erfindung werden nachfolgend anhand der Zeichnungen näher beschrieben, dabei zeigen:

Figur 1 eine Montageschelle in schaubildlicher Darstellung;
Figur 2 die Montageschelle der Figur 1, im Schnitt II-II der Figur 1;
Figur 3 den Kopf einer Montageschelle mit an den Bandenden angesetzten Verankerungselementen, im Vertikalschnitt;

Figur 4 den Kopf einer Montageschelle mit unterschiedlich hohen Aufnahmeausnehmungen, im Vertikalschnitt;

Figuren 5 bis 7 den Kopf einer Montageschelle mit auf unterschiedlicher Höhe angeordneten Aufnahmeausnehmungen und einer Rastvorrichtung in verschienenen Betriebsstellungen der Verriegelungshülse, in Seitenansicht; und

Figuren 8 und 9 den Kopf einer Montageschelle mit einem aus einem Blechring gebildeten Aufnahmekörper in den Schnitten VIII-VIII der Figur 9 bzw. IX-IX der Figur 8.

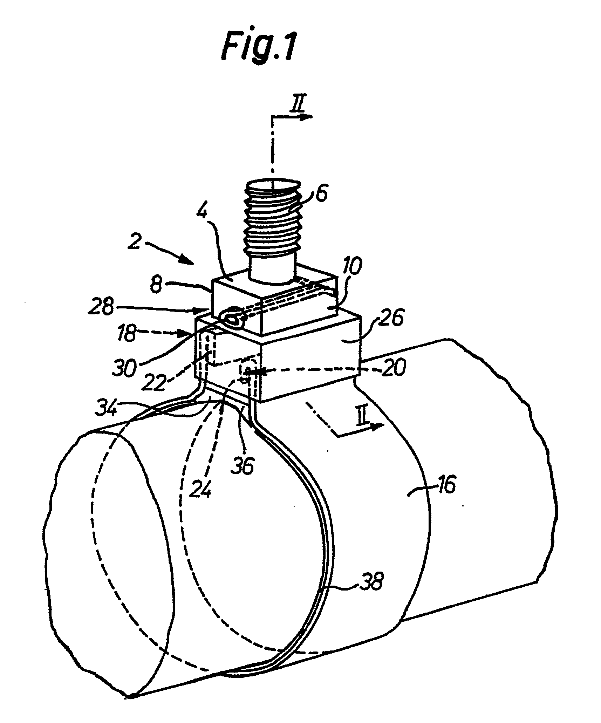

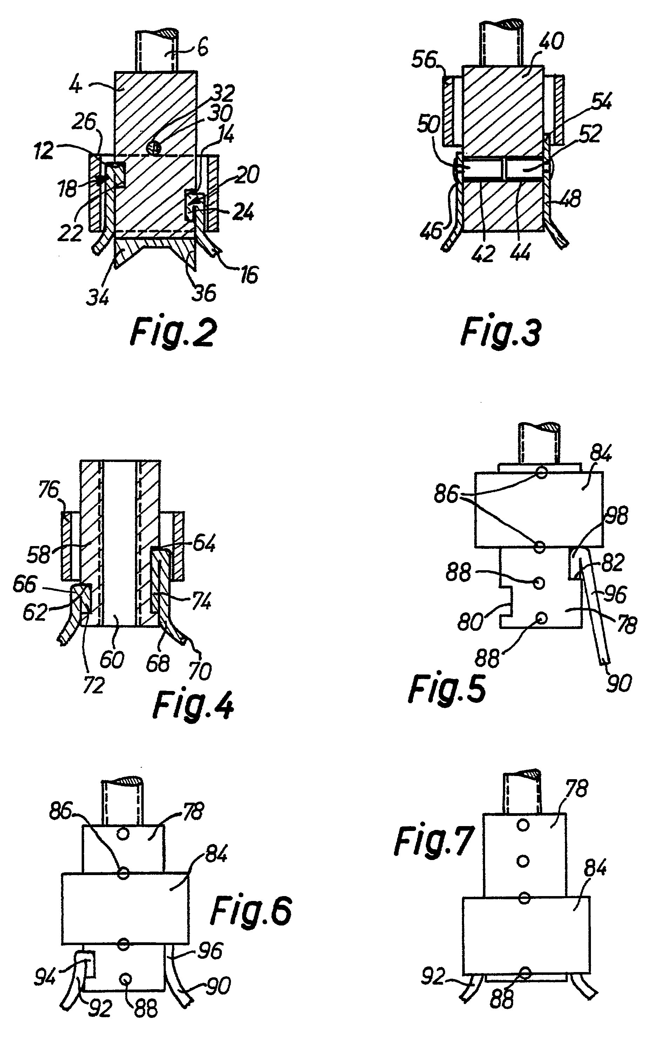

Die in den Figuren 1 und 2 dargestellte Montageschelle weist einen Befestigungteil 2 auf, der aus einem Aufnahmekörper 4 und daran angeordneten Gewindebolzen 6 gebildet ist. Der quaderförmig ausgebildete Aufnahmekörper 4 weist an zwei gegenüberliegenden Seiten 8, 10 auf unterschiedlicher Höhe liegende Aufnahmeausnehmungen 12, 14 auf, die als Aufnahmenuten ausgebildet sind und Teile von Verschlüssen für einen Bandteil 16 bilden. Letzterer dient zum Umschlingen und Befestigen eines Bauteiles, z.B. eines Rohres. Der Bandteil 16 weist an seinen Enden Verankerungselemente 18, 20 auf, die durch Zurückbiegen von Bandabschnitten gebildet sind. Die Verankerungselemente 18, 20 bilden somit vorspringende Verankerungsstege 22, 24, die in den Verankerungsnuten angeordnet sind. Eine über die Bandenden geschobene in Richtung der Höhe des Aufnahmekörpers verschiebbare Verriegelungshülse hält die Verankerungsstege 22, 24 in den Aufnahmeausnehmungen 12, 14, wobei in einer ersten Betriebsstellung, der Vormontagestellung zunächst nur der Verankerungssteg 22 in der Aufnahmeausnehmung 12 gehalten wird, und erst in der zweiten Stellung die Arretierung auch des anderen Verankerungssteges 24 in der Aufnahmeausnehmung 14 erfolgt. Eine Arretiervorrichtung 28 verhindert ein Abgleiten der Verriegelungshülse 26 aus der Arbeitsstellung. Diese Arretiervorrichtung enthält einen als Splint ausgebildeten Stift 30, der in einer Bohrung 32 des Aufnahmekörpers 4 unmittelbar über der in Arbeitsstellung befindlichen Verriegelungshülse 26 angeordnet ist.

An der unteren Stirnseite des Aufnahmekörpers 4 sind zwei Zentriernocken 34, 36 befestigt. Die Zentriernocken bestehen vorzugsweise aus Kautschuk und sind an den Aufnahmekörper 4 angeklebt. Auf der Innenseite ist der Bandteil 16 mit einer Kautschukbeschichtung 38 versehen.

Die Figur 3 zeigt den Kopf einer weiteren Montageschelle, bei der der Aufnahmekörper Aufnahmeausnehmungen 42, 44 aufweist, die als Durchgangsbohrung ausgestaltet sind. An den Bandenden 46, 48 sind Verankerungselemente 50, 52 befestigt, die als Verankerungsbolzen ausgestaltet sind, welche mit den Bandenden 46, 48 vernietet sind. Ein Bandende 48 weist einen nach oben vorstehenden Bandabschnitt 54 auf, der von der Verriegelungshülse 56 erfassbar ist, bevor diese an dem anderen Bandende 46 angreift. Dadurch kann das Bandende 48 mittels der Verriegelungshülse 56 in einer ersten Betriebsstellung provisorisch am Aufnahmekörper 40 festgehalten werden, bevor das andere Bandende 46 mit dem Verankerungselement 50 angesetzt wird.

Die Figur 4 zeigt den Kopf einer weiteren Montageschelle, wobei der Aufnahmekörper 58 zur Befestigung an einem Bauteil eine axiale Gewindebohrung 60 enthält, in die eine Befestigungsschraube eingeschraubt werden kann. Der Aufnahmekörper 58 weist an gegenüberliegenden Seiten Aufnahmeausnehmungen 62, 64 auf, die als Nuten ausgestaltet sind und unterschiedliche Höhen besitzen. Die Bandenden 66, 68 des Bandteiles 70 enthalten Verankerungselemente 72, 74, die ähnlich dem Ausführungsbeispiel der Figuren 1 und 2 durch zurückgebogene Bandabschnitte gebildet sind. Die Verankerungselemente 72, 74 bilden so Verankerungsstege, die entsprechend den unterschiedlichen Höhen der Aufnahmeausnehmungen 62, 64 ebenfalls unterschiedliche Höhen aufweisen. Auch in diesem Falle kann das Verankerungselement 74 mit der grösseren Höhe zunächst in der Aufnahmeausnehmung 64 angeordnet und mittels der Verriegelungshülse 76 fixiert werden, bevor der Bandteil mit dem anderen Verankerungselement 72 in der Aufnahmeausnehmung 62 angeordnet wird, wodurch ebenfalls die Befestigung des Bandteiles am Aufnahmekörper erleichtert wird.

Die Figuren 5 bis 7 zeigen schliesslich den Kopf einer weiteren Montageschelle. Der Aufnahmekörper 78 ist an gegenüberliegenden Seiten mit Aufnahmeausnehmungen 80, 82 versehen, die wiederum als Aufnahmenuten ausgestaltet sind, welche jedoch auf unterschiedlicher Höhe am Aufnahmekörper 78 angeordnet sind. Zwischen dem Aufnahmekörper 78 und der Verriegelungshülse 84 ist eine Rastvorrichtung vorhanden, die durch Rastnocken 86 an der Verriegelungshülse 84 und Rastausnehmungen 88 am Aufnahmekörper 78 gebildet ist. Die Rastausnehmungen 88 am Aufnahmekörper liegen auf verschiedener Höhe und bestimmen die einzelnen Betriebsstellungen der Verriegelungshülse. In der in Figur 5 gezeigten obersten Stellung sind beide Aufnahmeausnehmungen 80, 82 frei zugänglich. Zur Befestigung des Bandteiles 90 wird eines der Bandenden 92 mit seinem Verankerungselement 94 in die Aufnahmeausnehmung 82 eingelegt. Durch Verschieben der Verriegelungshülse 84 nach unten, bis der Rastnocken 86 in der weiteren Rastausnehmung einrastet, wird zunächst das erste Bandende 92 überdeckt und mit seinem Verankerungselement 94 in der Aufnahmeausnehmung 82 verriegelt. Ohne auf das Bandende 92 und die Verriegelungshülse 94 achten zu müssen, kann der Bandteil 90 um einen zu befestigen Bauteil gelegt werden, bis sein anderes Bandende 96 mit seinem Verriegelungselement 98 in die weitere Aufnahmeausnehmung 80 eingebracht ist. Wie dies in Figur 6 gezeigt ist. Dann kann die Verriegelungshülse 84 auch über das zweite Bandende 96 nach unten geschoben werden, bis der Rastnocken 86 in der untersten Rastausnehmung 88 einrastet, worauf beide Bandenden 92, 96 am Aufnahmekörper 78 verankert sind. Die Rastvorrichtung dient in dieser Stellung gleichzeitig auch zur Fixierung der Verriegelungshülse 84 in der in Figur 7 gezeigten Arbeitsstellung.

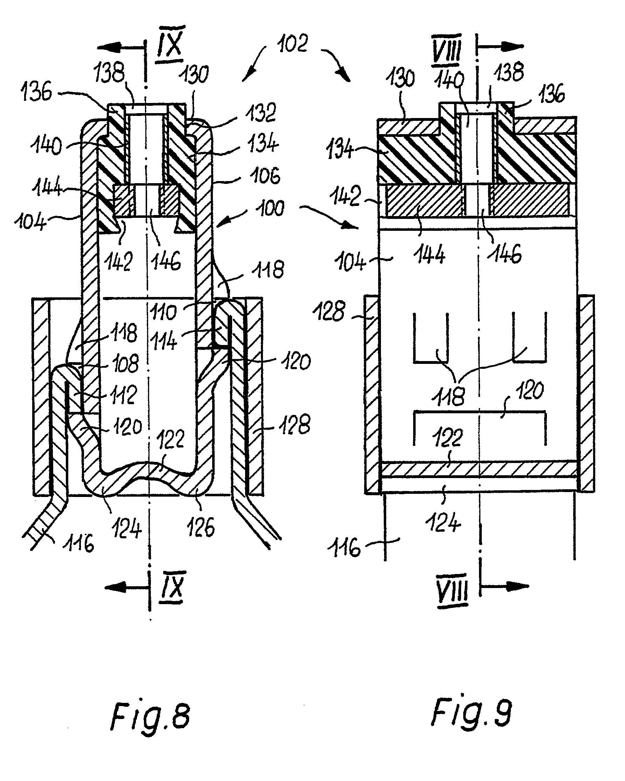

Die Figuren 8 und 9 zeigen eine Montageschelle, bei der der Aufnahmekörper 100 des Befestigungsteiles 102 aus einem Blechring gebildet ist. Die an gegenüberliegenden Seiten 104, 106 des Befestigungsteiles 102 befindlichen Aufnahmeausnehmungen 108, 110 für die Verankerungselemente 112, 114 des Bandteiles 116 liegen auf unterschiedlichen Höhen und werden vorzugsweise durch ausgestanzte Auskragungen 118, 120 gebildet. Durch eine untere Einbiegung 122 am Blechring sind Zentriernocken 124, 126 zum Ausrichten des Aufnahmekörpers an einem Gegenstand gebildet. Eine Verriegelungshülse 128 dient zur Fixierung der Verankerungselemente am Aufnahmekörper 100. Der Befestigungsteil 102 weist überdies an der oberen Stirnseite 120 des Blechringes eine Oeffnung 132 auf. Im Blechring ist ein Dämpfungskörper 134 aus kautschukelastischem Material eingesetzt, der mit einem Hals 136 durch die Oeffnung 132 greift. Im Dämpfungskörper 132 ist eine koaxial durch den Hals 136 verlaufende Bohrung 138 vorhanden, in der eine Distanzhülse 140 eingesetzt ist. Eine untere, über die Breite des Blechringes verlaufende Ausnehmung 142 im Dämpfungskörper 134 dient zur Aufnahme eines Metallriegels 144, der eine koaxial zur Bohrung 138 angeordnete Gewindebohrung 146 für eine Befestigungsschraube aufweist. Durch diese Ausbildung wird die Uebertragung von Körperschall von einem am Bandteil 116 angehängten Gegenstand zu einem Konstruktionselement, an dem die Montageschelle zu befestigen ist, verhindert.

In den gezeigten Ausführungsbeispielen bestehen der Aufnahmekörper, die Verriegelungshülse und der Bandteil vorzugsweise aus Metall. Es ist allerdings auch möglich, den Bandteil aus einem Gewebe herzustellen oder aus Kunststoff. Insbesondere in letzterem Falle kann ein Verankerungselement einstückig mit dem Bandteil geformt werden.

Bezugszeichenliste

2 Befestigungsteil
4 Aufnahmekörper
6 Gewindebolzen
8 Seite
10 Seite
12 Aufnahmeausnehmung
14 Aufnahmeausnehmung
16 Bandteil
18 Verankerungselement
20 Verankerungselement
22 Verankerungssteg
24 Verankerungssteg
26 Verriegelungshülse
28 Arretiervorrichtung
30 Stift
32 Bohrung
34 Zentriernocken
36 Zentriernocken
38 Kautschukbeschichtung
40 Aufnahmekörper
42 Aufnahmeausnehmung
44 Aufnahmeausnehmung
46 Bandende
48 Bandende

50 Verankerungselement
52 Verankerungselement
54 Bandabschnitt
56 Verriegelungshülse
58 Aufnahmekörper
60 Gewindebohrung
62 Aufnahmeausnehmung
64 Aufnahmeausnehmung
66 Bandende
68 Bandende
70 Bandteil
72 Verankerungselement
74 Verankerungselement
76 Verriegelungshülse
78 Aufnahmekörper
80 Aufnahmeausnehmung
82 Aufnahmeausnehmung
84 Verriegelungshülse
86 Rastnocke
88 Rastausnehmung
90 Bandteil
92 Bandende
94 Verankerungselement
96 Bandende
98 Verankerungselement
100 Aufnahmekörper
102 Befestigungsteil
104 Seite
106 Seite
108 Aufnahmeausnehmung
110 Aufnahmeausnehmung
112 Verankerungselement
114 Verankerungselement
116 Bandteil
118 Auskragung
120 Auskragung
122 Einbiegung
124 Zentriernocken
126 Zentriernocken
128 Verriegelungshülse
130 Stirnseite
132 Oeffnung
134 Dämpfungskörper
136 Hals
138 Bohrung
140 Distanzhülse
142 Ausnehmung in 132
144 Metallriegel
146 Gewindebohrung

**Patentansprüche**

1. Montageschelle mit einem Befestigungsteil, an dem ein mittels eines Verschlusses verschliessbarer Bandteil angeordnet ist, wobei der Verschluss einen mit dem Befestigungsteil (2, 102) verbundenen Aufnahmekörper (4, 40, 58, 78, 100) und eine über diesen in Richtung seiner Höhe verschiebbare Verriegelungshülse (26, 56, 76, 84, 128) aufweist, wobei weiter der Aufnahmekörper an gegenüberliegenden Seiten (8, 10, 104, 106) Aufnahmeausnehmungen (12, 14, 42, 44, 62, 64, 80, 82, 108, 110) zur Aufnahme von Verankerungselementen (18, 20, 50, 52, 72, 74, 94, 98, 112, 114) der Bandenden (46, 48, 66, 68, 92, 96) enthält und die Verriegelungshülse (26, 56, 76, 84, 128) über die an den Aufnahmeausnehmungen (12, 14, 42, 44, 62, 64, 80, 82, 108, 110) angeordneten Bandenden (46, 48, 66, 68, 92, 96) schiebbar ist, dadurch gekennzeichnet, dass die Bandenden (46, 48, 66, 68, 92, 96) am Aufnahmekörper (4, 40, 58, 78, 100) auf unterschiedlichen Höhen angeordnet sind.

2. Montageschelle nach Anspruch 1, dadurch gekennzeichnet, dass die Aufnahmeausnehmungen (80, 82, 108, 110) auf unterschiedlicher Höhe angebracht sind.

3. Montageschelle nach Anspruch 1, dadurch gekennzeichnet, dass die Aufnahmeausnehmungen (62, 64) unterschiedliche Höhen und die Verankerungselemente (72, 74) entsprechend unterschiedliche Höhen aufweisen.

4. Montageschelle nach Anspruch 1, dadurch gekennzeichnet, dass die Verankerungselemente (50, 52) als Verankerungsbolzen und die Aufnahmeausnehmungen (42, 44) als entsprechende Aufnahmelöcher ausgebildet sind.

5. Montageschelle nach Anspruch 1, dadurch gekennzeichnet, dass die Verankerungselemente (50, 52) an den Bandenden (46, 48) befestigt sind.

6. Montageschelle nach Anspruch 1, dadurch gekennzeichnet, dass zwischen Verriegelungshülse (84) und Aufnahmekörper (78) eine Rastvorrichtung (86, 88) zur Lagesicherung der Verriegelungshülse (84) in den verschiedenen Betriebsstellungen vorhanden ist, wobei die Rastvorrichtung vorzugsweise an der Verriegelungshülse (84) einen Rastnocken (86) aufweist, der mit Rastausnehmungen (88) im Aufnahmekörper (78) zusammenwirkt.

7. Montageschelle nach Anspruch 1, dadurch gekennzeichnet, dass sie eine Vorrichtung (30, 32) zum Arretieren der Verriegelungshülse (26) in der Arbeitsstellung aufweist, die vorzugsweise aus einem in einer Bohrung (32) des Aufnahmekörpers (4) eingeführten Stift (30) gebildet ist, an dem die Verriegelungshülse (4) in Arbeitsstellung ansteht.

8. Montageschelle nach Anspruch 1, dadurch gekennzeichnet, dass am Aufnahmekörper (4) in Richtung des Bandteiles (16) vorstehende Zentriernocken (34, 36) vorhanden sind, die vorzugsweise mindestens teilweise aus Kautschuk bestehen.

9. Montageschelle nach Anspruch 1, dadurch gekennzeichnet, dass der Aufnahmekörper (100) aus einem Blechring gebildet ist, an dem die Aufnahmeausnehmungen (108, 110) vorzugsweise durch ausgestanzte Auskragungen (118, 120) gebildet sind.

10. Montageschelle nach Anspruch 9, dadurch gekennzeichnet, dass der Befestigungsteil (102) einen in den Blechring eingesetzten Dämpfungskörper (134) aufweist, in den ein Metallriegel (144) mit einer Gewindebohrung (146) eingebettet ist, die koaxial zu einer Bohrung (138) ausgerichtet ist, welche koaxial durch einen Hals (136) des Dämpfungskörpers (134) verläuft, der durch eine Oeffnung (132) an der oberen Stirnseite (130) des Blechringes ragt.

**Claims**

1. Mounting clamp with a fastening part, to which a strap part is affixed by a closable lock comprising a receiving element (4, 40, 58, 78, 100) connected with the fastening part (2, 102) and a locking collar (26, 56, 76, 84, 128) slidable over the fastening part in the direction of its height, further the receiving part including receiving recesses (12, 14, 42, 44, 62, 64, 80, 82, 108, 110) at opposite sides (8, 10, 104, 106) for receiving anchoring elements (18, 20, 50, 52, 72, 74, 94, 98, 112, 114) of the ends (46, 48, 66, 68, 92, 96) of the strap, the locking collar (26, 56, 76, 84, 128) being slidable over the ends (46, 48, 66, 68, 92, 96) of the strap arranged in the receiving recesses (12, 14, 42, 44, 62, 64, 80, 82, 108, 110) characterized in that the ends (46, 48, 66, 68, 92, 96) of the strap are arranged at different levels of the receiving element (4, 40, 58, 78, 100).

2. Mounting clamp according to claim 1, characterized in that the receiving recesses (80, 82, 108, 110) are arranged at different levels.

3. Mounting clamp according to claim 1, characterized in that the receiving recesses (62, 64) have different heights and the anchoring elements (72, 74) have the corresponding different heights.

4. Mounting clamp according to claim 1, characterized in that the anchoring elements (50, 52) are constructed as anchoring bolts and the receiving recesses (42, 44) are corresponding receiving holes.

5. Mounting clamp according to claim 1, characterized in that the anchoring elements (50, 52) are fastened at the ends (46, 48) of the strap.

6. Mounting clamp according to claim 1, characterized in that an arresting device (86, 88) being arranged between the locking collar (84) and the receiving element (78) for securing the locking collar (84) in different positions of operation, the arresting device preferably comprises an arresting cam (86) at the locking collar (84) cooperating with an arresting recess (88) at the receiving element (78).

7. Mounting clamp according to claim 1, characterized in comprising a blocking device (30, 32) for blocking the locking collar (26) in the working position, preferably built out as pin (30) arranged in a bore (32) of the receiving element (4) against which the locking collar abuts.

8. Mounting clamp according to claim 1, characterized in that centering cams (34, 36) are arranged at the receiving element (4), projecting toward the strap part (16) and are preferably and at least in part made out of caoutchouc.

9. Mounting clamp according to claim 1, characterized in that the receiving element (100) is a ring of sheet metal wherein the receiving recesses (108, 110) are preferably built up as punched-out projections (118, 120).

10. Mounting clamp according to claim 9, characterized in that the fastening part (102) comprises a damping element (134) inserted into the ring of metal, a bar (144) of metal being embedded in the damping element (134) and comprising a thread bore (146) arranged coaxially to a bore (138) extending coaxially through a neck (136) of the damping element (134) which neck (136) projects through an opening (132) in the uper front side (130) of the ring of metal.

## Revendications

1. Bride de montage, avec une partie de fixation sur laquelle est disposée une partie de bande susceptible d'être, bloquée par une fermeture, cette fermeture comportant un corps récepteur (4, 40, 58, 78, 100) relié à la partie de fixation (2, 102) et un manchon de verrouillage (26, 56, 76, 84, 128) susceptible de coulisser sur ce corps récepteur en direction de sa hauteur, le corps récepteur comportant, en outre, sur des côtés opposés (8, 10, 104, 106) des évidements récepteurs (12, 14, 42, 44, 62, 64, 80, 82, 108, 110) destinés à recevoir des éléments d'ancrage, (18, 20, 50, 52, 72, 74, 94, 98, 112, 114) des extrémites de bande (46, 48, 66, 68, 92, 96), et le manchon de verrouillage (26, 56, 76, 84, 128) étant susceptible d'être, déplacé sur les extrémités de bande (46, 48, 66, 68, 92, 96) disposées contre les évidements récepteurs (12, 14, 42, 44, 62, 64, 80, 82, 108, 110), bride de montage caractérisée en ce que les extrémités de bande (46, 48, 66, 68, 92, 96) sont disposées à des hauteurs différentes contre le corps récepteur (4, 40, 58, 78, 100).

2. Bride de montage selon la revendication 1, caractérisée en ce que les évidements récepteurs (80, 82, 108, 110) sont placés à des hauteurs différentes.

3. Bride de montage selon la revendication 1, caractérisée en ce que les évidements récepteurs (62, 64) ont des hauteurs différentes et que les éléments d'ancrage (72, 74) ont, de façon correspondante, des hauteurs différentes.

4. Bride de montage selon la revendication 1, caractérisée en ce que les éléments d'ancrage (50, 52) sont réalisés sous la forme de goujons d'ancrage et les évidements récepteurs (42, 44) sous la forme de trous récepteurs correspondants.

5. Bride de montage selon la revendication 1, caractérisée en ce que les éléments d'ancrage (50, 52) sont fixés aux extrémités de bande (46, 48).

6. Bride de montage selon la revendication 1, caractérisée en ce qu'il est prévu, entre le manchon de verrouillage (84) et le corps récepteur (78), un dispositif d'encliquetage (86, 88) pour fixer le manchon de verrouillage (84) dans les différentes positions de fonctionnement, ce dispositif d'encliquetage comportant, de préférence, sur le manchon de verrouillage (84), une came d'encliquetage (86) qui coopère avec des évidements d'encliquetage (88) sur le corps récepteur (78).

7. Bride de montage selon la revendication 1, caractérisée en ce que, pour arrêter le manchon de verrouillage (26) dans sa position de fonctionnement, cette bride de montage comporte un dispositif (30, 32) qui est constitué, de préférence, par une broche (30) engagée dans un perçage (32) du corps récepteur (4) et contre laquelle s'applique le manchon de verrouillage (4) dans sa position de fonctionnement.

8. Bride de montage selon la revendication 1, caractérisée en ce qu'il est prévu sur le corps récepteur (4), en direction de la partie de bande (16), des cames de centrage en saillie (34, 36), qui sont, de préférence, au moins partiellement en caoutchouc.

9. Bride de montage selon la revendication 1, caractérisée en ce que le corps récepteur (100) est constitué par un anneau en tôle, sur lequel les évidements récepteurs (108, 110) sont, de préférence, constitués par des enfoncements (118, 120) obtenus par poinçonnage.

10. Bride de montage selon la revendication 9, caractérisée en ce que la partie de fixation (102) comporte un corps d'amortissement (134) mis en place dans l'anneau en tôle et dans lequel est inséré un verrou métallique (144), avec un perçage fileté (146) orienté coaxialement par rapport à un perçage (138) qui s'étend coaxialement à travers un collet (136) du corps d'amortissement (134) qui pénètre à travers une ouverture (132) sur la face frontale supérieure (130) de l'anneau en tôle.

# Fig.1

Fig.2

Fig.3

Fig.4

Fig.5

Fig.6

Fig.7

Fig.8

Fig.9